# EUROPEAN PATENT SPECIFICATION

(11) **EP 1 350 079 B1**
(45) Date of publication and mention of the grant of the patent: **31.08.2005**
(21) Application number: 02726989.3
(22) Date of filing: 07.01.2002
(51) Int. Cl.: G01G 11/00, G01G 17/00

(54) **A METHOD OF WEIGHING OBJECTS AND CONVEYOR BELT**
VERFAHREN ZUM WÄGEN VON OBJEKTEN UND FÖRDERBAND
PROCEDURE POUR PESER DES OBJETS ET CONVOYEUR

(30) Priority: 08.01.2001 DK 200100022
(43) Date of publication of application: 08.10.2003
(73) Proprietor: SEELEN A/S, DK-6700 Esbjerg (DK)
(72) Inventor: ANDERSEN, Anders, H., DK-6818 Arre (DK)
(74) Representative: Sundien, Thomas
(86) International application number: PCT/DK2002/000014
(87) International publication number: WO 2002/054025

(56) References cited:
- WO-A1-99/36753
- US-A- 5 576 520

## Description

The invention relates to a method of weighing objects on a conveyor belt that comprises use of at least one first conveyor and at least one second conveyor; wherein at least one conveyor is provided with means for automatically weighing objects; and wherein the objects are transferred from the first conveyor to the second conveyor. The invention further relates to a conveyor belt comprising at least one conveyor which is provided with means for automatically weighing objects.

Already known are weighing systems consisting of a number of conveyors, of which one or more is/are provided with equipment for electronic weighing. The objects are arranged continuously one at a time, while the conveyor with weighing equipment - also designated a weighing belt - advances. This means that the requisite length of the weighing belt is the longest length of an object and plus an extra length that is determined by the belt rate and the time it takes for the weighing equipment to perform a sufficiently accurate weighing. An example of a system of this type is taught in US 5,949,031.

When objects or series of objects are weighed that are of different lengths, the length of the weighing belt is, as mentioned, determined by the length of the longest object and an extra length. This is due to the fact that the entire object and only this object is allowed to and must be able to be on the weighing belt while being weighed. This also means that there must be sufficient space between the objects order to ensure that there is exactly one object on the weighing belt during the weighing. The core of the problem associated with the prior art is that, in case the objects vary in length from, eg one length unit and as much as 25 length units, and the requisite space is one length unit, the capacity and performance of the weighing belt can only be satisfactory when the objects are approximately 25 length units in length. In case of short objects the performance will be disproportionately low. In case of long objects only one length unit is wasted for space, whereas the short ones waste 24 length units, since only one object must be present on the weighing belt at a time.

This is a major problem since weighing belts are often used in combination with production plants that have a constant yield of eg one and the same product that is to be cut into a number of different lengths, and whereby the weighing belt is used eg for quality control. One example is a machine that planes and mills boards for floor coverings that are sawn off in three different lengths corresponding to three different end products. The weight of the sawn-off pieces of board is checked to ascertain that they are within strict tolerances for uniformity. The length of the weighing belt is determined by the longest pieces of board, whereas the capacity - ie how many meters of boards that can be produced and weighed per hour - is determined by the shortest ones, where the exploitation of the weighing belt is smallest, see above. A further example is when a machine manufactures insulating material in continuous webs, where the webs are cut off after having left the machine into pieces of varying lengths corresponding to different applications, and wherein the weight of the pieces is checked prior to packing.

It is the object of the present invention to provide a method of weighing objects of different lengths, whereby the reduction in capacity upon weighing of short objects is as small as possible. Including to provide a method that comprises a conveyor that is provided with electronic means for weighing, whereby the active length of the conveyor can be varied and thereby be adapted accurately to the minimum relative to the length of the object in question.

The novel aspect of the invention resides in the fact that the first conveyor and the second conveyor comprise separate paths, wherein - between the separate paths - there are free passages, and wherein the first conveyor has a first end with a substantially fixed position and a second end that can be displaced, which second end overlaps the second conveyor in its free passages, whereby the overlapping portion between the first and the second conveyor can be modified by displacement of the second end of the first conveyor, thus enabling variations in the active length of each conveyor.

The active length of each conveyor being variable, including the conveyor that is provided with means for automatic weighing, it is obtained that the active length during weighing can be adjusted exactly to the minimum relative to the length of the object in question. And as a consequence the reduction in capacity during weighing of short objects is minimal.

A further advantage obtained with the invention is that the building-in dimensions of the combination of the first and the second conveyor does not change when the active length of the conveyors is varied. This is imperative, since in this manner it is avoided to move conveyors or the process machinery and packing equipment with which the conveyors cooperate.

The second conveyor having a first end that can be displaced and a second end that has an essentially fixed position, whereby the overlapping portion between the first and the second conveyors can be modified by displacement of the first end of the second conveyor, a further option is available of accurately adapting the active length of the weighing conveyor to the minimum relative to the length of the object in question. And as a consequence yet a further option is provided for rendering the reduction in capacity during weighing of short objects as small as possible.

By providing the first and the second conveyor to be substantially parallel and multi-levelled and at least one of the conveyors being telescopic and provided with a belt tightening device whereby the displacement of one or both the displaceable ends can be accomplished by telescopic action, and the other ends remaining in substantially fixed positions, whereby the active lengths can be varied by telescopic action, it is possible to provide yet a further option of accurately adjusting the active length of the weighing conveyor to a minimum relative to the length of the object in question. And as a consequence an option of reducing the decrease in capacity during weighing of short objects to a minimum.

By the first and the second conveyor being essentially parallel and both conveyors being telescopic and provided with a belt tightening means so as to enable the displacement of the displaceable ends to be accomplished by telescopic action, and the other ends remaining essentially in a fixed location whereby the active lengths 6 and 7 can be varied by the telescopic action, it is obtained that yet a further option is provided for accurately adjusting the active length of the weighing conveyor to a minimum relative to the length of the actual object. And as a consequence thereof the option of rendering the reduction in capacity during weighing of short objects as small as possible.

By at least one of the first and second conveyors comprising means for displacing each their displaceable end it is obtained that the active length of the weighing conveyor can be modified at any desired point in time. Including during operation of the conveyors. Besides an operation mode is enabled in which the objects may have a variety of different lengths, where the active length of the weighing conveyor is changed between each weighing. For instance in the division of boards where it is desired to have for instance two long pieces and two short pieces because this matches the starting length of the boards best with regard to waste.

According to a preferred embodiment the weighing conveyor is located essentially in a fixed location whereby a simple construction of the conveyor is obtained. This is convenient, since this conveyor is already more complex than other conveyors that are not provided with means for automatic weighing. It is also obtained that any requisite setting for correction of tare or calibration that was to be obtained by displacement of the displaceable end can be avoided. Hereby the system becomes less complex and less costly.

By the method comprising at least one further conveyor that receives weighed objects, and wherein there is configured - on or by the conveyor - a sorting device, it is obtained that the method enables sorting of the objects, eg according to weight, or sorting away objects that are eg beyond given tolerances.

By the at least one further conveyor having a first end where the weighed objects are received and that is in a substantially fixed position, and a second end that is displaceable, it is obtained that specific objects can be conveyed in the direction of displacement, for instance to a cassation container or to other conveyors.

By the at least one further conveyor comprising means for displacing the displaceable end it is enabled to actively switch between different positions to which the weighed objects can be advanced, whereby active sorting becomes an option.

The conveyors being of the belt-type means that they can be configured with separate paths with free passages between them.

The conveyors being of the chain type means that, according to an alternative embodiment, they can be configured with separate paths with free passages between them.

By having - before the weighing conveyor - at least one sensor that records the length of the objects and wherein the recorded length is used for automatically adjusting the active length of the weighing conveyor, it is obtained that it is no longer necessary to use any other means to modify the active length to be in accordance with the length of the objects, which is now accomplished automatically. That is, it is for instance no longer necessary to feed control data in the form of lengths and sequences of lengths for a control, since this is now accomplished automatically, whereby possible origins of errors are minimised. Besides it is possible to collect associated data for length and weight that are used eg for sorting, quality control, etc.

The driving end of the first conveyor and the driving end of the second conveyor being located opposite each other, whereby the non-operative ends are the ones that overlap, it is obtained that as much space as possible is available for bringing about the overlapping, since there is no need for space for drive means in the overlapping zone.

The invention further relates to a conveyor belt comprising at least one conveyor provided with means for automatically weighing objects which is the subject of claim 14.

### List of Figures

The figures show examples of preferred embodiments.
Figure 1 is a lateral view of one embodiment of the method, wherein relatively long objects are weighed.
Figure 2 shows a conveyor 1 in its one extreme position.
Figure 3 shows a conveyor 1 in its second extreme position.
Figure 4 shows an embodiment seen from above.
Figure 5 shows a lateral view of an embodiment of the method, wherein relatively short objects are weighed.
Figure 6 shows a conveyor 2 in its one extreme position.
Figure 7 shows a conveyor 2 in its second extreme position.

### Description

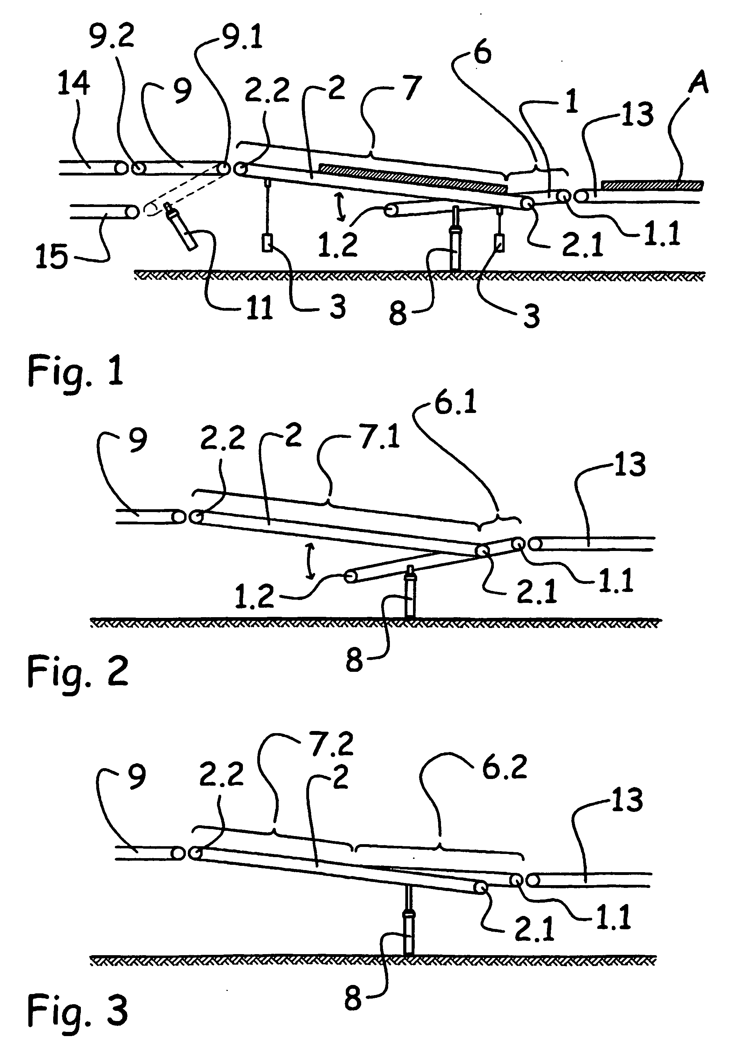

Figure 1 shows relatively long objects A on a conveyor 13 that hands over the objects to a conveyor 1. The objects arrive continuously at suitable distances. The conveyor 1 has a first end 1.1 and a second end 1.2 that is displaceable with means 8 for displacement. The means 8 can comprise pneumatic and hydraulic cylinders, electric actuators, etc. From the conveyor 1 the objects are delivered to the conveyor 2. The conveyor 2 has a first end 2.1 and a second end 2.2. Besides the conveyor 2 comprises means 3 for automatic weighing, but such may also be located on the conveyor 1.

In the figures, the means 3 are merely illustrated as a number of weighing cells, said number being preferably 3 or 4, but the means 3 also comprise the electronic measurement and recording unit that is necessary. This is not shown; however, it is known to the person skilled in the art.

Now, Figure 1 shows the active length 6 of the first conveyor 1 and the active length 7 of the conveyor 2. The term 'active length' is intended to designate that part of the conveyor, which is clear of the other, whereby an object will only be located on the one. On the active length 6 and the first part of the conveyor 1 at the end 1.1, one object will merely be located on the conveyor 1 and partially on the conveyor 13. The figure shows the setting of the conveyors 1 and 2 that are set such that the active length 7 is long, since relatively long lengths are weighed on the conveyor 2.

Figure 1 shows a preferred embodiment, where displacement of the displaceable end 1.2 is primarily accomplished by rotation of the conveyor 1 around its essentially fixed end 1.1, but the displaceable ends 1.2 and 2.1 can, in an alternative embodiment, be displaced by telescopic action, ie a translation movement where the fixed ends remain in fixed positions. In such case at least one of the conveyors is telescopic and provided with a tightening device, whereby the active lengths 6 and 7 can be varied by the telescopic action. In this embodiment the two conveyors 1 and 2 are parallel and multi-levelled, but still overlapping.

Figure 1 also shows a conveyor 9 that has a substantially fixedly located end 9.1 and a displaceable end 9.2. The conveyor 9 receives the weighed objects from the conveyor 2. By or on the conveyor 9 a sorting device 10 can be arranged, that may eg be a pneumatic cylinder that moves a plate and is thus able to push eg an object of less weight to the side for cassation or to another conveyor. The conveyor 9 further comprises means 11 for displacement. The means 11 may comprise pneumatic and hydraulic cylinders, electric actuators, etc. From the conveyor 9 the objects can be handed over to the conveyor 14, from where it is conveyed eg to a packing machine. In case an object is for instance to be sorted away or the objects are to be divided in accordance with size, the displaceable end 9.2 of the conveyor 9 can be displaced by means 11 to a conveyor 15, from where the objects are further advanced. Instead of the conveyor 15, a cassation container or other can be used for collection. Besides, a flap or a chute can replace the conveyor 9 in case the objects can slide and still be transferred from the conveyor 2 to either the conveyor 14 or 15 or merely to the floor.

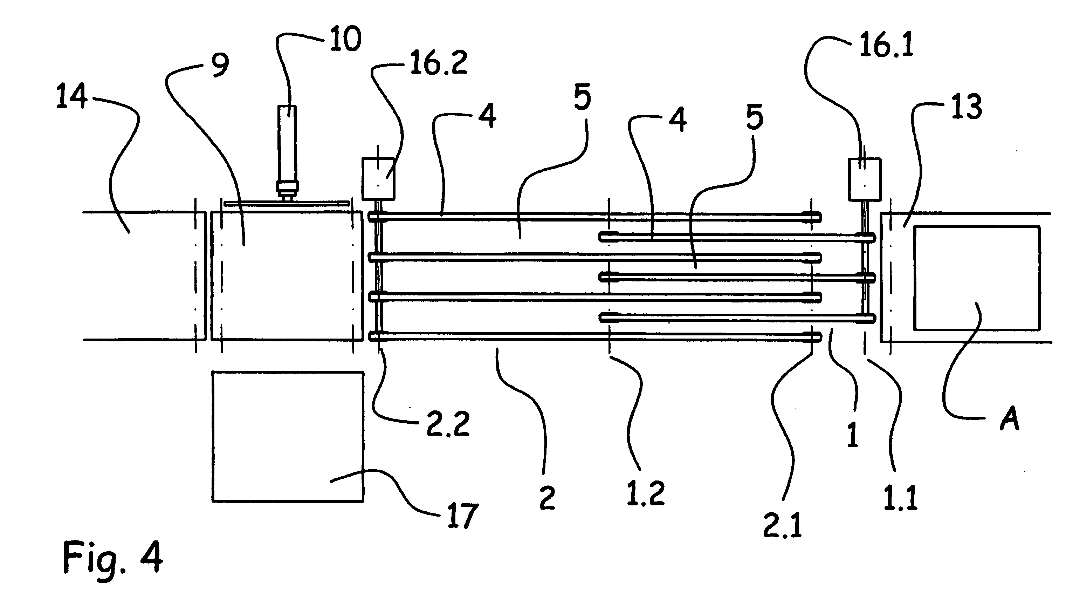

Figures 2 and 3 show the conveyor 1 and the conveyor 2 in an embodiment where the conveyor 2 is located in an essentially fixed position, while the conveyor 1 has a displaceable end 1.2 and means 8 for displacement. The displaceable end 1.2 is shown in its extreme position in Figure 2, and Figure 3 shows the second extreme position, but the displaceable end 1.2 can, of course, be positioned continuously variably between these positions. Besides, Figures 2 and 3 show the extremes 6.1 and 6.2 of the active length 6 and the extremes 7.1 and 7.2 of the active length 7 corresponding to the extreme positions of the displaceable end 1.2.

Now, Figure 4 shows the objects A on the conveyor 13. The length of the objects can be recorded by means of a sensor 12 that is located by or on the conveyor 13. The objects are delivered from the conveyor 13 to the conveyor 1 and from then on to the conveyor 2. The figure shows that the conveyors 1 and 2 comprise paths 4 and free passages 5. By configuring the conveyors in this manner, they are able to overlap each other, the paths 4 of the one being able to be in the free passage 5 of the other. The conveyor 1 comprises a driving end 1.1 with drive means 16.1 and a non-driving end 1.2. The conveyor 2 comprises a driving end 2.2 with drive means 16.2 and a non-driving end 2.1. From the conveyor 2 the objects are delivered to the conveyor 9, where a sorting device 10 can be configured that is able, for instance, to sort away objects to the cassation container 17 that can also be a conveyor. If the sorting device is not activated, the objects are delivered from the conveyor 9 to the conveyor 14. Selection of conveyors 1 and 2 of the belt type or the chain type makes it possible to form paths 4 and free passages 5. The chain type is operated by means of chain wheels and, between the ends, the chain can be located with its lowermost portion eg in a U-profile, whereby the chain is supported and guided laterally. The belt type is operated by means of belt pulleys that are provided with recesses for the belts, thereby controlling them laterally. The belts are supported between the ends, eg by a rectangular profile provided with a friction-reducing material, such as high-density polyethylene. In order to allow conveyors 1 and 2 to overlap, the driving ends can only feature one transversal shaft between chain wheels or belt pulleys. In the non-driving end the individual path 4 must therefore be supported separately - at least in the region where conveyors 1 and 2 overlap. In case of large dimensions conveyors 1 and 2 can also be of the belt type, which will not be practical in case of small dimensions.

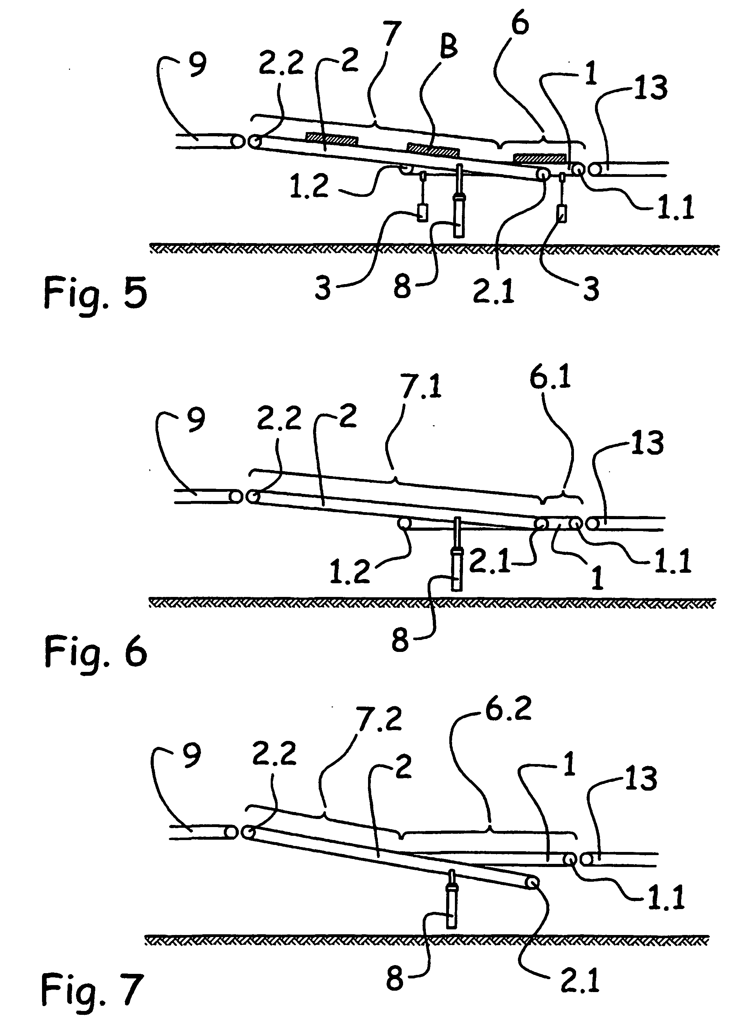

Figure 5 shows relatively short objects B that are advanced by means of a conveyor 13 to a conveyor 1, further to a conveyor 2 and from there on to a conveyor 9. The objects arrive continuously at suitable distances. The conveyor 1 has a first end 1.1 and a second end 1.2. The conveyor 2 has a first end 2.1 and a second end 2.2 that are displaceable with means 8 for displacement. The means 8 can comprise pneumatic and hydraulic cylinders, or actuators, etc. Besides, the conveyor 1 comprises means 3 for automatic weighing. Figure 5 shows the active length 6 of the first conveyor 1 and the active length 7 of the second conveyor 2. The figure shows the setting of the conveyors 1 and 2 that is adjusted such that the active length 6 is small, since relatively short objects are being weighed. The active length 7 is changed by displacement of the end 2.1 of the conveyor 2 by means 8 for displacement.

Figures 6 and 7 show the conveyor 1 and the conveyor 2 in a second embodiment, in which the conveyor 1 is in a substantially fixed position, while the conveyor 2 has a displaceable end 2.1 and means 8 for displacement. The displaceable end 2.1 is shown in Figure 6 in its one extreme position and in Figure 7 in the other, but of course it can be positioned continuously variably between these positions. Corresponding to the extreme positions of the displaceable end 2.1, the extremes 6.1 and 6.2, respectively, of the active length 6 and the extremes 7.1 and 7.2 of the active length 7 are given.

In the figures, all conveyors are depicted without showing particular details, such as frames, foundations, etc., since the exercise of such will be known to the person skilled in the art. All conveyors other than 1 and 2 - except in case of very large dimensions, where conveyors 1 and 2 can also be of the belt type - can be of any known type, such as eg chain conveyors, conveyor belts with or without lateral elements, belt conveyors, etc.

In Figure 1 and Figure 3, either conveyor 1 or conveyor 2 is shown with a displaceable end, but of course it is also an option that both may feature such at the same time.

## Claims

1. A method of weighing objects on a conveyor that comprise use of at least one first conveyor (1) and at least one second conveyor (2), of which at least one is provided with means (3) for automatically weighing objects, and wherein objects are transferred from one conveyor to the other, **characterised in that** the first conveyor (1) and the second conveyor (2) comprise separate paths (4), wherein there are - between the separate paths (4) - free passages (5); and that the first conveyor (1) has a first end (1.1) that is in an essentially fixed position, and a second end that can be displaced, said second end (1.2) overlapping the second conveyor (2) in the free passages (5) there of, whereby the active length (6) of the first conveyor (1) and the active length (7) of the second conveyor (2) can be modified by displacement of the second end (1.2) of the first conveyor.

2. A method of weighing objects according to claim 1, **characterised in that** the second conveyor (2) has a first end (2.1) that can be displaced; and a second end (2.2) that is in a substantially fixed position, whereby the active lengths (6) and (7) of the conveyors (1) and (2) can be modified by displacement of the first end (2.1) of the conveyor (2).

3. A method of weighing objects according to one of claims 1 or 2, **characterised in that** conveyors (1) and (2) are substantially parallel and multi-levelled; and that at least one of the conveyors (1) and (2) is/are telescopic and provided with a belt tightening device, whereby the displacement of the displaceable ends (1.2) or (2.1) can be accomplished by telescopic action; and that the ends (1.1) and (2.2) remain in an essentially fixed position, whereby the active lengths (6) and (7) can be varied by the telescopic action.

4. A method of weighing objects according to one of claims 1-3, **characterised in that** conveyors (1) and (2) are essentially parallel, and that both conveyors (1) and (2) are telescopic and provided with a belt tightening device so as to allow the displacement of the displaceable ends (1.2) or (2.1) to be accomplished by telescopic action; and that the ends (1.1) and (2.2) remain in a substantially fixed position, which means that the active lengths (6) and (7) can be varied by the telescopic action.

5. A method of weighing objects according to one of claims 1-4, **characterised in that** at least one of the first conveyor (1) and the second conveyor (2) comprise(s) means (8) for displacement of its displaceable end.

6. A method of weighing objects according to claim 1, **characterised in that** the conveyor that is provided with means (3) for automatically weighing objects is located in an essentially fixed position.

7. A method of weighing objects according to one of claims 1-6, **characterised in that** the method comprises at least one further conveyor (9) that receive(s) weighed objects, and wherein a sorting device (10) is configured on or at the conveyor (9).

8. A method of weighing objects according to claim 7, **characterised in that** the at least one further conveyor (9) has a first end (9.1), where the weighed objects are received, and that is located in an essentially fixed position, and a second end (9.2) that is displaceable.

9. A method of weighing objects according to claim 8, **characterised in that** the at least one further conveyor (9) comprises means (11) for displacing the displaceable end.

10. A method of weighing objects according to one of claims 1-9, **characterised in that** the conveyors (1) and (2) are of the belt type.

11. A method of weighing objects according to one of claims 1-10, **characterised in that** the conveyors (1) and (2) are of the chain type.

12. A method of weighing objects according to one of claims 1-11, **characterised in that**, before the weighing conveyor, at least one sensor (12) is located that records the length of the objects; and that the recorded length is used for automatically regulating the active lengths (6) and (7) for the conveyors (1) and (2).

13. A method of weighing objects according to one of claims 1-12, **characterised in that** the driving end of the first conveyor (1) and the driving end of the second conveyor (2) are located opposite each other, such that the non-driving ends are the ones that are caused to overlap.

14. A conveyor belt comprising a first conveyor (1) and a second conveyor (2), of which at least one is provided with means (3) for automatically weighing objects, and wherein objects are transferred from one conveyor to the other, **characterised in that** the first conveyor (1) and the second conveyor (2) comprise separate paths (4), wherein there are - between the separate paths (4) - free passages (5); and that the first conveyor (1) has at least one end which is overlapping the second conveyor (2) in the free passages (5) there of, and that at least one conveyor (1,2) may be displaced relative to the other conveyor (1,2), through which the active length (6) of the first conveyor (1) and the active length (7) of the second conveyor (2) can be modified.

## Patentansprüche

1. Verfahren zum Wiegen von Objekten auf einem Förderer, das die Verwendung mindestens eines ersten Förderers (1) und mindestens eines zweiten Förderers (2) umfasst, von denen mindestens einer mit Mitteln (3) zum automatischen Wiegen von Objekten bereitgestellt ist, und wobei Objekte von einem Förderer zum anderen übergeben werden, **dadurch gekennzeichnet, dass** der erste Förderer (1) und der zweite Förderer (2) separate Wege (4) umfassen, wobei - zwischen den separaten Wegen (4) - freie Durchgänge (5) vorgesehen sind, und dass der erste Förderer (1) mit einem ersten Ende (1.1), das sich in einer im Wesentlichen feststehenden Position befindet, und einem zweiten Ende ausgestattet ist, das verschoben werden kann, wobei das zweite Ende (1.2), das den zweiten Förderer (2) in seinen freien Durchgängen (5) überlappt, wodurch die wirksame Länge (6) des ersten Förderers (1) und die wirksame Länge (7) des zweiten Förderers (2) durch Verschieben des zweiten Endes (1.2) des ersten Förderers veränderbar sind.

2. Verfahren zum Wiegen von Objekten nach Anspruch 1, **dadurch gekennzeichnet, dass** der zweite Förderer (2) mit einem ersten Ende (2.1), das verschoben werden kann, und einem zweiten Ende (2.2) ausgestattet ist, das sich in einer im Wesentlichen feststehenden Position befindet, wobei die wirksamen Längen (6) und (7) der Förderer (1) und (2) durch Verschieben des ersten Endes (2.1) des Förderers (2) veränderbar sind.

3. Verfahren zum Wiegen von Objekten nach einem der Ansprüche 1 oder 2, **dadurch gekennzeichnet, dass** die Förderer (1) und (2) im Wesentlichen parallel und in mehreren Ebenen angeordnet sind und dass mindestens einer der Förderer (1) und (2) ausziehbar ausgebildet und mit einer Bandstraffungsvorrichtung bereitgestellt ist, wobei das Verschieben der verschiebbaren Enden (1.2) oder (2.1) durch Ausziehen ausgeführt werden kann, und dass die Enden (1.1) und (2.2) in einer im Wesentlichen feststehenden Position verbleiben, wobei die wirksamen Längen (6) und (7) durch das Ausziehen veränderbar sind.

4. Verfahren zum Wiegen von Objekten nach einem der Ansprüche 1 bis 3, **dadurch gekennzeichnet, dass** die Förderer (1) und (2) im Wesentlichen parallel liegen und dass beide Förderer (1) und (2) ausziehbar und mit einer Bandstraffungsvorrichtung bereitgestellt sind, so dass das Verschieben der verstellbaren Enden (1.2) oder (2.1) durch Ausziehen erfolgt, und dass die Enden (1.1) und (2.2) in einer im Wesentlichen feststehenden Position bleiben, das heißt, dass die wirksamen Längen (6) und (7) durch Ausziehen veränderbar sind.

5. Verfahren zum Wiegen von Objekten nach einem der Ansprüche 1-4, **dadurch gekennzeichnet, dass** mindestens der erste Förderer (1) oder beide zweite Förderer (2) ein Mittel (8) zum Verschieben seines verschiebbaren Endes umfasst/en.

6. Verfahren zum Wiegen von Gegenständen nach Anspruch 1, **dadurch gekennzeichnet, dass** der Förderer, der mit Mitteln (3) zum automatischen Wiegen von Objekten bereitgestellt ist, in einer im Wesentlichen feststehenden Position angeordnet ist.

7. Verfahren zum Wiegen von Objekten nach einem der Ansprüche 1-6, **dadurch gekennzeichnet, dass** das Verfahren mindestens einen weiteren Förderer (9) umfasst, der/die die gewogenen Objekte aufnimmt, und wobei eine Sortiervorrichtung (10) auf oder an dem Förderer (9) angeordnet ist.

8. Verfahren zum Wiegen von Objekten nach Anspruch 7, **dadurch gekennzeichnet, dass** mindestens der eine weitere Förderer (9) mit einem ersten Ende (9.1), an dem die gewogenen Objekte aufgenommen werden, und das in einer im Wesentlichen feststehenden Position angeordnet ist, und einem zweiten Ende (9.2) ausgestattet ist, das verschiebbar ist.

9. Verfahren zum Wiegen von Objekten nach Anspruch 8, **dadurch gekennzeichnet, dass** mindestens der eine weitere Förderer (9) Mittel (11) zum Verschieben des verschiebbaren Endes umfasst.

10. Verfahren zum Wiegen von Objekten nach einem der Ansprüche 1-9, **dadurch gekennzeichnet, dass** die Förderer (1) und (2) in der Form von Bändern ausgeführt sind.

11. Verfahren zum Wiegen von Objekten nach einem der Ansprüche 1-10, **dadurch gekennzeichnet, dass** die Förderer (1) und (2) kettenförmig ausgeführt sind.

12. Verfahren zum Wiegen von Objekten nach einem der Ansprüche 1-11, **dadurch gekennzeichnet, dass** vor dem Wiegeförderer mindestens ein Fühler (12) angeordnet ist, der die Länge der Gegenstände aufzeichnet, und dass die aufgezeichnete Länge zum automatischen Regeln der wirksamen Längen (6) und (7) der Bänder (1) und (2) dient.

13. Verfahren zum Wiegen von Objekten nach einem der Ansprüche 1-12, **dadurch gekennzeichnet, dass** das Antriebsende des ersten Förderers (1) und das Antriebsende des zweiten Förderers (2) einander gegenüberliegend angeordnet sind, so dass die antriebsfreien Enden diejenigen sind, die überlappend sind.

14. Förderband mit einem ersten Förderer (1) und einem zweiten Förderer (2), von denen mindestens einer mit Mitteln (3) zum automatischen Wiegen von Objekten bereitgestellt ist, und wobei Objekte von einem Förderer zum anderen übergeben werden, **dadurch gekennzeichnet, dass** der erste Förderer (1) und der zweite Förderer (2) separate Wege (4) umfassen, wobei sie - zwischen den separaten Wegen (4) - freie Durchgänge (5) sind, und dass der erste Förderer (1) mindestens ein Ende aufweist, das den zweiten Förderer (2) in seinen freien Durchgängen (5) überlappt, und dass mindestens ein Förderer (1,2) gegenüber dem anderen Förderer (1,2) verschoben werden kann, wodurch die wirksame Länge (6) des ersten Förderers (1) und die wirksame Länge (7) des zweiten Förderers (2) veränderbar sind.

## Revendications

1. Procédé pour peser des objets sur un transporteur qui comprend l'utilisation d'au moins un premier transporteur (1) et d'au moins un second transporteur (2), dont au moins l'un est muni de moyens (3) pour peser automatiquement les objets, et dans lequel les objets sont transférés d'un transporteur à l'autre,
**caractérisé en ce que** le premier transporteur (1) et le second transporteur (2) comprennent des voies séparées (4) où il existe - entre les voies séparées (4) - des passages libres (5) ; et **en ce que** le premier transporteur (1) a une première extrémité (1.1) qui est dans une position sensiblement fixe, et une seconde extrémité qui peut être déplacée, ladite seconde extrémité (1.2) chevauchant le second transporteur (2) dans les passages libres (5) de celui-ci, grâce à quoi la longueur active (6) du premier transporteur (1) et la longueur active (7) du second transporteur (2) peuvent être modifiées par déplacement de la seconde extrémité (1.2) du premier transporteur.

2. Procédé pour peser des objets selon la revendication 1,
**caractérisé en ce que** le second transporteur (2) a une première extrémité (2.1) qui peut être déplacée ; et une seconde extrémité (2.2) qui est dans une position sensiblement fixe, grâce à quoi les longueurs actives (6) et (7) des transporteurs (1) et (2) peuvent être modifiées par déplacement de la première extrémité (2.1) du transporteur (2).

3. Procédé pour peser des objets selon l'une des revendications 1 ou 2,
**caractérisé en ce que** les transporteurs (1) et (2) sont sensiblement parallèles et à plusieurs niveaux ; et **en ce qu'**au moins l'un des transporteurs (1) et (2) est/sont télescopiques et munis d'un dispositif de tension de courroie, grâce à quoi le déplacement des extrémités déplaçables (1.2) ou (2.1) peut être réalisé par action télescopique ; et **en ce que** les extrémités (1.1) et (2.2) restent dans une position sensiblement fixe, grâce à quoi les longueurs actives (6) et (7) peuvent varier par l'action télescopique.

4. Procédé pour peser des objets selon l'une des revendications 1-3,
**caractérisé en ce que** les transporteurs (1) et (2) sont sensiblement parallèles, et **en ce que** les deux transporteurs (1) et (2) sont télescopiques et munis d'un dispositif de tension de courroie de façon à permettre le déplacement des extrémités déplaçables (1.2) ou (2.1) à réaliser par action télescopique ; et **en ce que** les extrémités (1.1) et (2.2) restent dans une position sensiblement fixe, ce qui signifie que les longueurs actives (6) et (7) peuvent varier par l'action télescopique.

5. Procédé pour peser des objets selon l'une des revendications 1-4,
**caractérisé en ce qu'**au moins l'un du premier transporteur (1) et du second transporteur (2) comprend(comprennent) des moyens (8) pour le déplacement de son extrémité déplaçable.

6. Procédé pour peser des objets selon la revendication 1,
**caractérisé en ce que** le transporteur, qui est muni de moyens (3) pour peser automatiquement des objets, est situé dans une position sensiblement fixe.

7. Procédé pour peser des objets selon l'une des revendications 1-6,
**caractérisé en ce que** le procédé comprend au moins un autre transporteur (9) qui reçoit(reçoivent) des objets pesés, et dans lequel un dispositif de triage (10) est configuré sur ou au niveau du transporteur (9).

8. Procédé pour peser des objets selon la revendication 7,
**caractérisé en ce qu'**au moins l'autre transporteur (9) a une première extrémité (9.1), où les objets pesés sont reçus, et qui est situé dans une position sensiblement fixe, et une seconde extrémité (9.2) qui est déplaçable.

9. Procédé pour peser des objets selon la revendication 8,
**caractérisé en ce qu'**au moins l'autre transporteur (9) comprend des moyens (11) pour déplacer l'extrémité déplaçable.

10. Procédé pour peser des objets selon l'une des revendications 1-9,
**caractérisé en ce que** les transporteurs (1) et (2) sont du type à courroie.

11. Procédé pour peser des objets selon l'une des revendications 1-10,
**caractérisé en ce que** les transporteurs (1) et (2) sont du type à chaîne.

12. Procédé pour peser des objets selon l'une des revendications 1-11,
**caractérisé en ce que**, avant le transporteur de pesée, au moins un capteur (12) est situé qui enregistre la longueur des objets ; et **en ce que** la longueur enregistrée est utilisée pour réguler automatiquement les longueurs actives (6) et (7) pour les transporteurs (1) et (2).

13. Procédé pour peser des objets selon l'une des revendications 1-12,
**caractérisé en ce que** l'extrémité motrice du premier transporteur (1) et l'extrémité motrice du second transporteur (2) sont situées en opposition l'une de l'autre, de telle sorte que les extrémités non motrices sont celles qui sont entraînées à se chevaucher.

14. Transporteur à courroie comprenant un premier transporteur (1) et un second transporteur (2), dont au moins l'un est muni de moyens (3) pour peser automatiquement des objets, et où les objets sont transférés d'un transporteur à l'autre,
**caractérisé en ce que** le premier transporteur (1) et le second transporteur (2) comprennent des voies séparées (4), où il existe - entre les voies séparées (4) - des passages libres (5) ; et **en ce que** le premier transporteur (1) a au moins une extrémité qui chevauche le second transporteur (2) dans les passages libres (5) de celui-ci, et **en ce qu'**au moins un transporteur (1, 2) peut être déplacé par rapport à l'autre transporteur (1, 2), par quoi la longueur active (6) du premier transporteur (1) et la longueur active (7) du second transporteur (2) peuvent être modifiées.
